# EUROPÄISCHE PATENTSCHRIFT

(11) **EP 0 685 363 B1**
(45) Veröffentlichungstag und Bekanntmachung des Hinweises auf die Patenterteilung: **16.09.1998**
(21) Anmeldenummer: 95106895.6
(22) Anmeldetag: 06.05.1995
(51) Int. Cl.: B60R 16/02

(54) **Solardach für Kraftfahrzeuge**
Solar roof for vehicles
Toit solaire pour véhicules

(30) Priorität: 01.06.1994 DE 4419177
(43) Veröffentlichungstag der Anmeldung: 06.12.1995
(73) Patentinhaber: WEBASTO KAROSSERIESYSTEME GmbH, D-82131 Stockdorf (DE)
(72) Erfinder: Ganz, Thomas, D-82131 Stockdorf (DE); Lutz, Berthold, D-85232 Unterbachern (DE); Liedl, Bernhard, D-86899 Landsberg (DE); Weissbrich, Alfons, D-82131 Gauting (DE)
(74) Vertreter: Wiese, Gerhard

(56) Entgegenhaltungen:
- EP-A- 0 652 137
- DE-A- 3 540 353
- DE-A- 3 830 484
- DE-A- 4 017 670
- DE-C- 4 020 655
- US-A- 4 911 257
- US-A- 5 233 227
- ATZ AUTOMOBILTECHNISCHE ZEITSCHRIFT, vol.95, no.11, 1993, DE page 592 - 596, GANZ, T.; HAHN, F.; WATZLAWICK, R. 'DIE ELEKTRONIK IM SCHIEBEDACH ALS KOMFORTELEMENT'
- SONNENENERGIE, vol., no.1, 1988, MüNCHEN (DE) page 9 - 11, ADELMANN, P. 'MPP-TRACKING / STELLGLIEDER FüR MPP-TRACKER'

## Beschreibung

Die Erfindung betrifft ein Solardach für Kraftfahrzeuge mit einem Solardeckel und einem aus Solarzellen aufgebauten Solargenerator zur Stromversorgung eines Verbrauchers und/oder Akkumulators und mit einem der Impedanzanpassung zwischen dem Solargenerator und dem Verbraucher und/oder dem Akkumulator dienenden Gleichspannungswandler.

Ein Solardach gemäß dem Oberbegriff des Anspruchs 1 ist in der DE-Zeitschrift ATZ-Automobiltechnische Zeitschrift 95(1993)11, Seiten 592-596, näher beschrieben. Solardächer sind ferner aus der Zeitschrift "Sonnenenergie" 1/88, Seiten 9 bis 11 und der DE 40 Schaltungsanordnungen für 17 670 A bekannt. Eine für ein solches Solardach geeignete Schaltungsanordnung ist im einzelnen in der EP-A-0 652 137 (Stand der Technik nach Artikel 54(3) EPÜ) erläutert.

Bei bekannten Kraftfahrzeug-Solardächern wird der Gleichspannungswandler als Baugruppe verplant und verbaut, die räumlich irgendwo im Fahrzeug, bestenfalls in der Nähe des Dachantriebes, in einem verbliebenen Restvolumen angesiedelt ist. Angesichts des insbesondere bei Personenwagen kompakten Fahrzeugaufbaus sind solche Restvolumen in der Regel geometrisch und volumetrisch beschränkt. Daher ist die Realisierung der Gleichspannungswandler-Baugruppe in hohem Maße von dem speziellen Kraftfahrzeugmodell abhängig, was die Fertigung und Lagerhaltung verteuert. Infolge der verteilten Komponenten sind Nachrüstung und Service am Solarsystem aufwendig. Die Kompaktheit des Systems läßt zu wünschen übrig.

Der Erfindung liegt die Aufgabe zugrunde, ein Solardach für Kraftfahrzeuge zu schaffen, das die vorstehend geschilderten Mängel mindestens weitgehend ausräumt.
Diese Aufgabe wird dadurch gelöst, daß bei einem Solardach der eingangs genannten Art erfindungsgemäß der Gleichspannungswandler als flächige Baugruppe ausgebildet und in den Solardeckel integriert ist.

Bei einem Solardach steht in der Breiten- und Längsabmessung viel Platz zur Verfügung, der nur eindimensional, nämlich in der Bauhöhe, beschränkt ist. Dieser Platz wird erfindungsgemäß durch die flächige Ausbildung des Gleichspannungswandlers genutzt, wobei die Solarzellen und der Gleichspannungswandler sowohl schaltungstechnisch als auch physikalisch eine Einheit bilden. Das Solardach nach der Erfindung erlaubt eine einfache Applikation im Baukastenprinzip und gegebenenfalls auch als Nachrüstlösung. Das erfindungsgemäße Solardach ist besonders kundenfreundlich, da eine fahrzeugseitige Verkabelung zwischen Solargenerator und Gleichspannungswandler ganz oder weitgehend entfällt. Das neue Solardach erlaubt auch eine einfache Diagnose im Fehlerfall, da ein qualifizierter Funktionstest sowohl am eingebauten wie am ausgebauten Solardach möglich ist. Durch kurze Kabellängen oder gegebenenfalls vollkommene Vermeidung von Kabeln an der Eingangsseite des Gleichspannungswandlers sind die Probleme der elektromagnetischen Verträglichkeit (EMV) wesentlich verringert. Außerdem ist gewährleistet, daß der Gleichspannungswandler selbsttätig im wesentlichen die gleiche Temperatur wie der Solargenerator annimmt, was eine Erhöhung des Systemwirkungsgrades über eine Temperaturnachführung der MPP (Maximum Power Point)-Spannung möglich macht.

Bei einem Solardach mit mindestens einem verstellbaren Solardeckel und einem darunter angeordneten Himmel ist der Gleichspannungswandler vorzugsweise in dem zwischen dem Solardeckel und dem Himmel verbleibenden Bauraum untergebracht, der auch genutzt werden kann, um zusätzliche Baugruppen der Solarstromversorgung und/oder einer Solardeckelsteuerung aufzunehmen, beispielsweise die weiteren elektronischen Komponenten der Solarstromversorgung und/oder einen Regensensor und seine Elektronik.

Im Falle eines undurchsichtigen Solardeckels, insbesondere bei einem mit kristallinen Solarzellen bestückten Solargenerator, kann der Gleichspannungswandler an beliebiger Stelle an der Unterseite des Solardeckels angeordnet sein. Er kann dabei flächenmäßig maximal ebenso groß sein wie das Solarmodul, und er kann einfach in Form zusätzlich aufgebrachter Schichten (z.B. in Dünn- oder Dickschichttechnologie) ausgebildet sein. Bei einem teiltransparenten Solardeckel, beispielsweise einem Deckel, bei dem ein Solarmodul mit amorphen Solarzellen auf einem Deckelinnenblech montiert ist, sitzt der Gleichspannungswandler zweckmäßig unter einem undurchsichtigen Teil des Solardeckels, beispielsweise im Bereich des Deckelinnenbleches.

Bevorzugte Ausführungsbeispiele der Erfindung sind nachstehend unter Bezugnahme auf die beiliegenden Zeichnungen näher erläutert. Es Zeigen:
Fig. 1 eine Ansicht eines insgesamt undurchsichtig ausgebildeten Solardeckels, von unten gesehen und
Fig. 2 eine Ansicht ähnlich Fig. 1 für einen teiltransparenten Solardeckel.

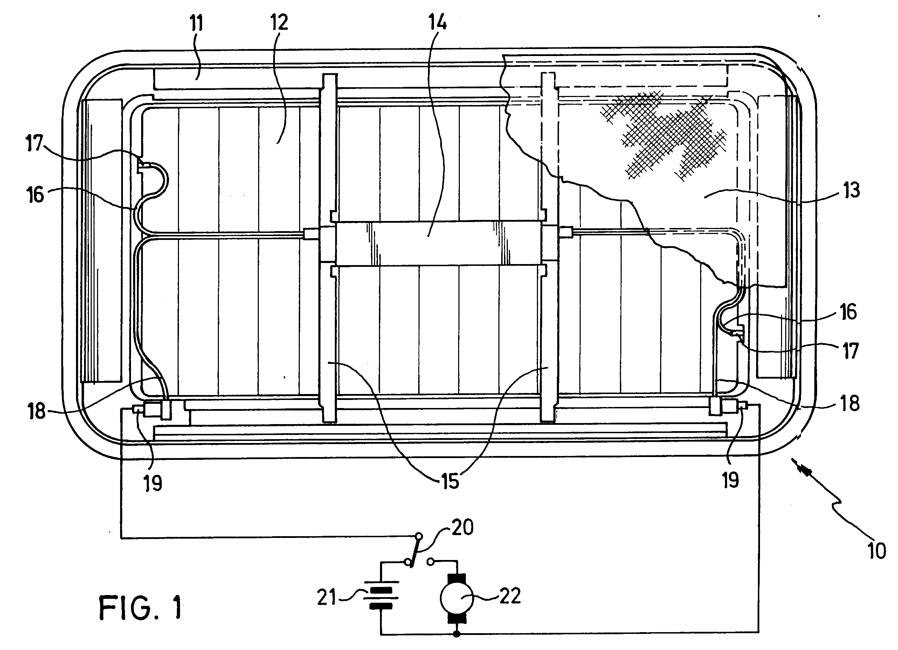

Der in Fig. 1 insgesamt mit 10 bezeichnete Solardeckel kann in beliebiger bekannter Weise (z.B. DE 38 30 484 A1 und DE 40 20 655 C1) aufgebaut sein und bedarf daher vorliegend keiner näheren Erläuterung. Dabei ist davon ausgegangen, daß bei der Ausführungsform gemäß Fig. 1 der Solardeckel undurchsichtig, also insbesondere mit kristallinen Solarzellen bestückt, ist. Bei 11 ist ein Deckelinnenblech veranschaulicht. Mit 12 ist ein Solarmodul oder Solargenerator bezeichnet. Im eingebauten Zustand ist die Unterseite des Solardeckels 10 mittels eines Himmels 13 zur Innenseite des Kraftfahrzeuges hin verkleidet. Ein als flächige Baugruppe ausgebildeter Gleichspannungswandler 14 ist in einem zentralen Teil des Solardeckels 10 in dem Raum zwischen dem Solarmodul 12 und dem Himmel 13 untergebracht. Bei dem veranschaulichten Ausführungsbeispiel sitzt der Gleichspannungswandler 14 an der Solardeckelunterseite zwischen Streben 15, die mit dem Deckelinnenblech 11 verbunden sind. Über kurze Kabel 16 und Anschlüsse 17 steht der Gleichspannungswandler 14 eingangsseitig mit dem Solarmodul 12 in Verbindung. Der Ausgang des Gleichspannungswandlers 14 ist über weitere Kabel 18 mit Ausgangsanschlüssen 19 in Form sogenannter Solarkontakte verbunden. Die Ausgangsanschlüsse 19 können ihrerseits, beispielsweise über einen Umschalter 20 mit einem Akkumulator 21 oder einem Verbraucher 22, beispielsweise einem Gebläsemotor, verbunden werden. Der Umschalter 20 kann wahlweise für manuelle und/oder automatische, z.B. temperaturabhängige, Betätigung ausgelegt sein.

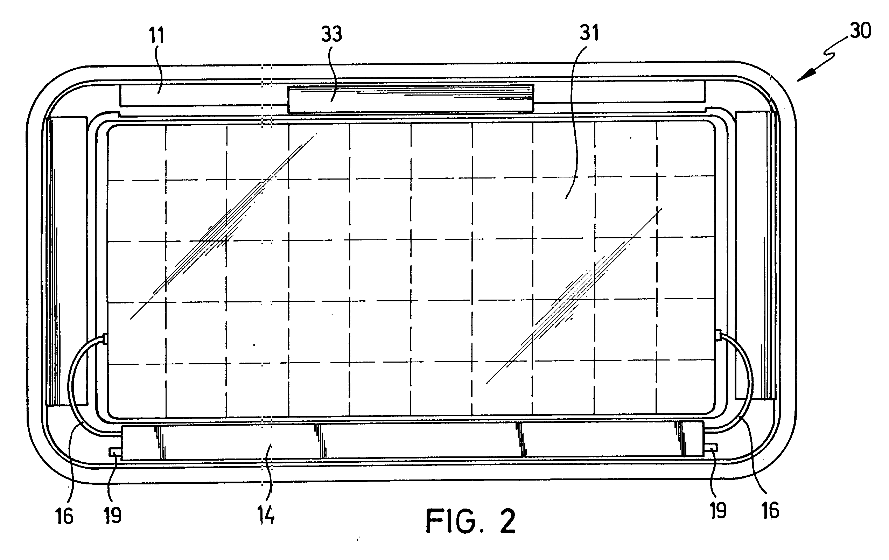

Bei der abgewandelten Ausführungsform gemäß Fig. 2 ist der Solardeckel 30 mit einem transparenten Solarmodul 31 ausgestattet, beispielsweise einem Solarmodul aus amorphen Solarzellen. Der Solardeckel 30 weist, ebenso wie der Solardeckel 10, das Deckelinnenblech 11 auf, er ist infolgedessen insgesamt teiltransparent. Der Gleichspannungswandler 14 ist an der Unterseite des Deckelinnenblechs 11 montiert.

Bei 33 ist eine Elektronikbaugruppe angedeutet, die gleichfalls an der Unterseite des Deckelinnenbleches 11 sitzt und die beispielsweise weitere Elektronikkomponenten der Solarstromversorgung oder einen Regensensor mit zugehöriger Elektronik beinhalten kann.

## Patentansprüche

1. Solardach für Kraftfahrzeuge mit einem Solardeckel (10, 30) und einem aus Solarzellen aufgebauten Solargenerator (12) zur Stromversorgung eines Verbrauchers (22) und/oder Akkumulators (21) und mit einem der Impedanzanpassung zwischen dem Solargenerator und dem Verbraucher (22) oder dem Akkumulator (21) dienenden Gleichspannungswandler (14), dadurch gekennzeichnet, daß der Gleichspannungswandler (14) als flächige Baugruppe ausgebildet und in den Solardeckel (10, 30) integriert ist.

2. Solardach nach Anspruch 1 mit mindestens einem verstellbaren Solardeckel (10) und einem darunter angeordneten Himmel (13), dadurch gekennzeichnet, daß der Gleichspannungswandler (14) in dem zwischen dem Solardeckel (10) und dem Himmel (13) verbleibenden Bauraum untergebracht ist.

3. Solardach nach Anspruch 1 oder 2, dadurch gekennzeichnet, daß mindestens eine zusätzliche Baugruppe (33) der Solarstromversorgung und/oder einer Solardachsteuerung in den Solardeckel integriert ist.

4. Solardach nach einem der vorhergehenden Ansprüche mit einem teiltransparenten Solardeckel, dadurch gekennzeichnet, daß der Gleichspannungswandler (14) unter einem undurchsichtigen Teil oder einem Deckelinnenblech (11) des Solardeckels (30) sitzt.

## Claims

1. A solar roof for motor vehicles having a solar cover (10,30) and a solar generator (12) built up from solar cells, for supplying current to a consumer (22) and/or a battery (21) and with a direct current voltage converter (14) which serves to adapt impedance between the solar generator and the consumer (22) or the battery (21), characterized in that the direct current voltage converter (14) is constructed as a flat module and is integrated into the solar cover (10,30).

2. A solar roof according to Claim 1, with at least one displaceable solar cover (10) and, beneath it, a headlining (13), characterized in that the direct current voltage converter (14) is accommodated in the space remaining between the solar cover (10) and the headlining (13).

3. A solar roof according to Claim 1 or 2, characterized in that at least one additional module (33) for solar power supply and/or solar roof control is integrated into the solar cover.

4. A solar roof according to one of the preceding Claims, with a partially transparent solar cover, characterized in that the direct current voltage converter (14) is disposed under an opaque part or an inner cover plate (11) of the solar cover (30).

## Revendications

1. Toit solaire pour véhicules automobiles, comprenant un couvercle solaire (10, 30) et un générateur solaire (12) construit en cellules solaires pour l'alimentation d'un élément utilisateur (22) et/ou un accumulateur (21) et avec un convertisseur à courant continu (14) servant à adapter l'impédance entre le générateur solaire et l'élément consommateur (22) ou l'accumulateur (21),
caractérisé en ce que
le convertisseur à courant continu (14) est un groupe de construction plat intégré au couvercle solaire (10, 30).

2. Toit solaire selon la revendication 1, comprenant au moins un couvercle solaire (10) réglable et, sous celui-ci, un ciel (13),
caractérisé en ce que
le convertisseur à courant continu (14) est monté dans l'espace subsistant entre le couvercle solaire (10) et le ciel (13).

3. Toit solaire selon les revendications 1 ou 2,
caractérisé en ce que
dans le couvercle solaire est intégré un groupe complémentaire (33) de l'alimentation en courant solaire et/ou d'une commande de toit solaire.

4. Toit solaire selon une des revendications précédentes, équipé d'un couvercle solaire partiellement transparent,
caractérisé en ce que
le convertisseur à courant continu (14) est placé sous une partie opaque ou une tôle interne (11) du couvercle solaire (30).
